# EUROPÄISCHE PATENTSCHRIFT

(11) **EP 2 413 704 B1**
(45) Veröffentlichungstag und Bekanntmachung des Hinweises auf die Patenterteilung: **07.05.2014**
(21) Anmeldenummer: 09775854.4
(22) Anmeldetag: 03.04.2009
(51) Int. Cl.: A23B 4/037, A23L 3/44, A23L 1/317

(54) **VERFAHREN ZUR HERSTELLUNG EINES INSTANT-HACKFLEISCHPRODUKTS**
METHOD FOR MANUFACTURING AN INSTANT GROUND MEAT PRODUCT
PROCÉDÉ DE PRODUCTION D'UN PRODUIT INSTANTANÉ À BASE DE VIANDE HACHÉE

(43) Veröffentlichungstag der Anmeldung: 08.02.2012
(73) Patentinhaber: Fraunhofer-Gesellschaft zur Förderung der angewandten Forschung e.V., 80686 München (DE)
(72) Erfinder: EISNER, Peter, 85354 Freising (DE); ZACHERL, Christian, 85356 Freising (DE); MÜLLER, Klaus, 85356 Freising (DE); DENKER, Erich, 82418 Hechendorf-Murnau (DE)
(74) Vertreter: Wiedemann, Markus
(86) Internationale Anmeldenummer: PCT/DE2009/000433
(87) Internationale Veröffentlichungsnummer: WO 2010/111984

(56) Entgegenhaltungen:
- EP-A- 0 340 449
- WO-A-2005/058048
- WO-A-2006/068499
- CH-A- 371 670
- DE-A1- 1 492 713
- DE-A1- 1 729 206
- DE-A1- 2 924 452
- US-A- 3 067 043
- US-A- 3 150 985
- US-A1- 2005 048 189

## Beschreibung

Die Erfindung geht aus von einem Verfahren zur Herstellung eines Instant-Hackfleischprodukts gemäß dem Oberbegriff von Anspruch 1.

Durch Gefriertrocknung wird frischem Hackfleisch Wasser entzogen und dabei ein trockenes Instant-Hackfleischprodukt erzeugt, das nach erneutem Zusatz von Wasser (Rehydrierung) wieder in eine Konsistenz überführt werden kann, die der von frischem Hackfleisch sehr nahe kommt. Ein solches, auf Hackfleisch basierendes Trockenprodukt, welches erst nach einer Redydrierung gebrauchsfertig ist, wird im Folgenden als Instant-Hackfleischprodukt bezeichnet.

Gefriertrockner umfassen eine Trockenkammer, beheiz- und kühlbare Böden oder Horden innerhalb der Trockenkammer, eine Kältemaschine, einen Kondensator, ein Zwischenventil, eine Vakuumpumpe und Belüftungsventile. Der Prozess der Gefriertrocknung läuft dann wie folgt ab:

Beim Einfrieren wird das in dem zu gefriertrocknenden Objekt enthaltene Wasser vollständig zu Eis gefroren. Durch das Öffnen des Zwischenventils werden Kondensator und Vakuumpumpe für die Haupttrocknung aktiviert. Bei der Haupttrocknung wird das beim Einfrieren entstandene Eis aus dem Objekt entfernt. Durch die Vakuumpumpe wird in der Trockenkammer ein Vakuum erzeugt, durch welches das Wasser sublimiert, d.h. das Wasser geht vom festen Zustand (Eis) in den gasförmigen Zustand über. Durch die Sublimation entweicht das Wasser aus dem Objekt. Die für diese Reaktion benötigte Wärmeenergie wird durch die beheizbaren Böden oder Horden in der Trockenkammer erzeugt. Der entweichende Wasserdampf wandert dann in den durch die Kältemaschine gekühlten Kondensatorraum. Durch die Kälte wird der Wasserdampf zu Eis und schlägt sich an den Wänden des Kondensatorraums nieder. Um zu überprüfen, ob der Vorgang der Haupttrocknung vollständig abgeschlossen ist, wird das Zwischenventil geschlossen. Bleibt während der Schließung des Zwischenventils das Vakuum erhalten, ist die Trocknung vollständig beendet. Ist dagegen noch Feuchtigkeit vorhanden, muss der Vorgang der Haupttrocknung erneut gestartet werden. Im Rahmen der Haupttrocknung ist dann ein Großteil des Wassers aus dem Objekt entfernt worden, welches dann allerdings noch gebundenes Wasser enthalten kann. Dieses gebundene Wasser wird dann im Rahmen einer Nachtrocknung ebenfalls in Gas umgewandelt und entfernt.

Ein Verfahren zum Gefriertrocknen von Hackfleisch ist in der GB 989 545 A beschrieben, wobei dort größere Mengen Hackfleisch, beispielsweise ca. vierzehn Kilo Hackfleisch auf Böden (trays) der Trockenkammer gleichmäßig (evenly) verteilt werden. Dadurch wird eine relativ große zusammenhängende Masse an Hackfleisch gefriergetrocknet, was eine geringe Gefriertrocknungsgeschwindigkeit nach sich zieht. Um eine für eine Gefriertrocknung im industriellen Rahmen akzeptable Gefriertrocknungsgeschwindigkeit zu erzielen, müsste demnach die für den Gefriertrocknungsprozess eingesetzte Energie wesentlich gesteigert werden, was unwirtschaftlich ist.

In manchen Fällen werden durch Gefriertrocknung auch Trockenprodukte erzielt, die nach erneuter Wasserneuzugabe nur geringe Mengen an Wasser binden und deshalb einen eher geringen Rehydrierungsgrad aufweisen. Infolgedessen werden solche Produkte bei sensorischen Verkostungen als trocken und spröde beschrieben. Da solchermaßen erzeugte Trockenprodukte vielfach auch einen ranzigen Geruch aufweisen, haben sie einen deutlich verringerten Genusswert.

Die bei manchen bekannten Trockenprodukten im negativen Sinn veränderten Textureigenschaften, verursacht durch die trocknungsbedingte Abnahme der Nativität und der damit einhergehenden schlechteren Wasserbindung der Fleischproteine, führen dazu, dass der ursprüngliche Wassergehalt von frischem Hackfleisch nach erneutem Zusatz von Wasser in das Trockenprodukt (Rehydrierung) nicht wieder erreicht werden kann.

In der gattungsgemäßen US-A-3 150 985 wird ein Verfahren zur Herstellung von dehydrierten Hackfleischformlingen wie z.B. Hamburgerbrätlingen. Dabei wird Rindfleisch vor dem Zerkleinern zu Hackfleisch zusätzliches Fett beigegeben, falls das Rindfleisch zu mager ist.

Die WO 2005/058048 A1 beschreibt ein Verfahren zur Herstellung eines sterilen Lebensmittelriegels, welcher aus zwei Schichten Brot mit einer dazwischen angeordneten Schicht aus gehacktem Fleisch bestehen kann. Dabei werden dem gehackten Fleisch Antioxidantien in Form von Nitriden, Alpha-Tocopherol oder Rosmarienextrakt zugegeben.

### Aufgabe

Die Aufgabe der vorliegenden Erfindung besteht demgegenüber darin, ein Verfahren zur Herstellung eines Instant-Hackfleischprodukts bereitzustellen, mit welchem ein Instant-Hackfleischprodukt mit besonders guten sensorischen Eigenschaften hinsichtlich Geschmack und Geruch sowie mit einer guten Oxidationsbeständigkeit erzeugbar ist.

### Offenbarung der Erfindung

Gemäß dem Verfahren nach Anspruch 1 weist eine Projektionsfläche des Hackfleischformlings auf der Horde oder dem Boden der Trockenkammer des Gefriertrockners ein größtes Maß wie einen Durchmesser oder eine Kantenlänge von 2 cm bis 16 cm und in Bezug zur Horde bzw. zum Boden eine größte Höhe von 1 cm bis 4 cm auf.

Unter der Projektionsfläche sind die Umrisse eines Hackfleischformlings zu verstehen, welche entstehen, wenn ein senkrecht zu der den Hackfleischformling lagernden oder aufnehmenden Horde geführter gedachter Stift um den Formling herum geführt und die sich ergebende Umrisslinie auf der Horde angetragen wird.

Beispielsweise können mehr oder weniger regelmäßige quader-, würfel- oder zylinderförmige Formlinge als Ausgangsprodukt für den Gefriertrocknungsprozess hergestellt werden, aber auch Formlinge mit unregelmäßigen Formen, beispielsweise in Form eines Haufens. Aber auch strang- und wurstförmige Formlinge sind denkbar.

Bei Quadern oder Würfeln ist die Projektionsfläche ein Rechteck bzw. ein Quadrat, wobei die größte Kantenlänge des Rechtecks seine Länge ist.

Bei im wesentlichen zylindrischen Hackfleischformlingen, wie sie beispielsweise für Hamburger Pats oder für Frikadellen verwendet werden, ist der Durchmesser der dann kreisförmigen Projektionsfläche heranzuziehen. Denkbar sind aber auch zylindrische längliche und wurstähnliche Formlinge, welche mit ihrer Mantelumfangsfläche auf der Horde oder dem Boden aufliegen, wie beispielsweise Hackfleischwürste für Cevapcici. In diesem Fall wird das größte Maß der Projektionsfläche durch die Länge der zylindrischen Hackfleischrolle in Axialrichtung gebildet.

Nicht zuletzt kommen auch kugelförmige Hackfleischformlinge in Frage, beispielsweise in Form von meat balls oder Polpette, wie sie in oder zusammen mit Spagetti serviert werden. Solche kugelförmigen Strukturen sind bodenseitig dann aufgrund ihrer eher weichen Konsistenz abweichend von einer Kugelform etwas abgeflacht. Als größtes Maß der Projektionsfläche ist dann der Durchmesser der Kugel heranzuziehen.

Insgesamt vorteilhaft ist, dass solche in der Regel industriell gefertigten Hackfleischformlinge bereits vor dem Gefriertrocknen und daher in einer weichen, noch leicht modellier- und gestaltbaren Form in die später der dem Verzehr zugrunde liegende Gestalt gebracht werden können, um dann in dieser Form gefriergetrocknet werden. Die Hackfleischmasse muss dann nicht im gefriergetrockneten und harten Zustand in Form gebracht werden, wie dies beispielsweise bei der eingangs genannten GB 989 545 A der Fall ist, wo eine relativ große Hackfleischmasse auf den Horden oder Böden plattenförmig verstrichen und die endgültige Form erst nach dem Gefriertrocknen durch Zerkleinern hergestellt werden muss, beispielsweise durch Zersägen.

Bei einem demgegenüber unregelmäßigen Haufen soll, bezogen auf die Projektionsfläche des Haufens auf der Horde, das größte Maß ebenfalls in dem Bereich zwischen 2 cm und 16 cm liegen. Da bei einem solchen Haufen auch der Höhenverlauf unregelmäßig ist, sollte die größte Höhe des Haufens in dem Bereich zwischen 1 cm und 4 cm liegen.

Wesentlich ist dabei, dass zwischen den einzelnen, getrennt voneinander auf den Horden oder auf einer Horde angeordneten Formlingen noch genug Raum oder Platz vorhanden ist, damit das Vakuum bzw. die Wärme an einem möglichst hohen Anteil deren Oberfläche angreifen kann. Da Horden von Gefriertrocknern üblicherweise lochblechartig ausgebildet und demnach mit Durchgangsöffnungen versehen sind, kann die in der Trockenkammer herrschende Atmosphäre die Hackfleischformlinge auch bodenseitig erfassen.

Wenn Hackfleischformlinge derartige Dimensionen beim Gefriertrocknen aufweisen, ergibt sich eine relativ hohe Gefriertrocknungsgeschwindigkeit, wodurch der Gefriertrockungsprozess sehr ökonomisch ablaufen kann. Die gefriergetrockneten Hackfleischformlinge weisen weiterhin eine schnelle Rehydrierbarkeit und sehr gute sensorische Eigenschaften auf.

Wenn die Dimensionen der Hackfleischformlinge im Gefriertrockner kleiner sind und beispielsweise die größte Kantenlänge oder der Durchmesser 2 cm bzw. die größte Höhe 1 cm unterschreitet, so ergibt sich gegenüber erfindungsgemäß dimensionierten Hackfleischformlingen nach dem Gefriertrocknen eine geringere Rehydrierungsgeschwindigkeit. Weiterhin ist auch der Rehydrierungsgrad, d.h. die Fähigkeit der Wasseraufnahme geringer.

Bei größten Kantenlängen bzw. bei Durchmessern von mehr als 16 cm bzw. bei einer größten Höhe von mehr als 4 cm nimmt die Gefriertrocknungsgeschwindigkeit signifikant ab, was in einer unökonomischen Gefriertrocknung resultiert und deshalb unwirtschaftlich ist, wie bereits eingangs erwähnt wurde.

Bezogen auf die Masse derartiger Hackfleischformlinge weist ein solcher vor dem Gefriertrocknen eine Masse in einem Bereich von 5 g bis 1000 g (Gramm) auf.

Noch bessere Eigenschaften hinsichtlich Trocknungsdurchsatz, Rehydrierungsgeschwindigkeit, Rehydrierungsgrad und Produktqualität ergeben sich, wenn die Projektionsfläche des Hackfleischformlings auf der Horde des Gefriertrockners ein größtes Maß wie einen Durchmesser oder eine Kantenlänge von 3 cm bis 5 cm und in Bezug zur Horde eine größte Höhe von 2 cm bis 4 cm aufweist. Die Masse eines solchen Hackfleischformlings liegt dann in einem Bereich von 20 g bis 100 g (Gramm).

Bezogen auf das Massen-Oberflächenverhältnis eines auf der Horde angeordnete Hackfleischformlings vor dem Gefriertrocknen, d.h. auf das Verhältnis seiner Masse zu seiner Oberfläche ist ein Bereich von 1 kg/m² bis 7 kg/m² günstig.

Das durch dieses Verfahren erhaltene gefriergetrocknete Instant-Hackfleischprodukt bzw. die gefriergetrockneten Hackfeischformlinge sind dann durch die folgenden Eigenschaften gekennzeichnet:
- Der Wassergehalt ist kleiner als 5 Gew-%, insbesondere kleiner als 3 Gew-%,
- der Fleischproteingehalt ist größer als 75 Gew-%, insbesondere größer als 85 Gew-%, bezogen auf die Trockenmasse,
- die Fleischproteine weisen eine derart hohe Nativität auf, dass das trockene Instant-Hackfleischprodukt soviel Wasser aufnehmen kann, dass der Wassergehalt im rehydrierten Hackfleisch höher ist als im frischen Hackfleisch.

Es zeigte sich, dass bei dem erfindungsgemäßen Instant-Hackfleischprodukt, das aus frischem Hackfleisch mit einem Wassergehalt von 68% bis 73% gewonnen wurde, mehr als 75% Wasser eingebunden werden konnte, ohne dass das Wasser aus der rehydrierten Hackfleischmasse austrat. Aus den rehydrierten Hackfleischformlingen konnten besonders saftige und sensorisch sehr ansprechende Hackfleischprodukte, wie z.B. Frikadellen gewonnen werden. Ein sensorischer Unterschied zu Frikadellen aus frischem Hackfleisch war nicht erkennbar.

Das erfindungsgemäße Instant-Hackfleischprodukt bzw. ein gebrauchs- oder verzehrfertiges Hackfleisch wird im Einzelnen durch Anwenden des im Folgenden beschriebenen Verfahrens hergestellt:
Als Ausgangsmaterial für die Hackfleischformlinge eignen sich insbesondere Schweine-, Rinder-, Geflügel- und Fischfleisch, getrennt oder als Mischung. Das Fleisch kann vor der Gefriertrocknung mit Gewürzen, Gemüse oder anderen Einlagen vermischt werden. Die Zutaten werden dann später ebenfalls gefriergetrocknet. Optional können die Zutaten auch als Trockenzutaten nach der Gefriertrocknung des Hackfleischs in der Verpackung beigegeben werden. Die Hackfleisch-Zutatenmischung kann dann als Instant-Produkt abgepackt werden und liegt nach Rehydrierung und Erhitzung als verzehrfertiges Lebensmittel vor.

### Oxidationshemmende Vorbehandlung

Um ein besonders hohes Maß an Nativität (Wasserbindung) der Fleischproteine zu erreichen, wird frisches Hackfleisch schonend gefriergetrocknet nachdem ihm zuvor wenigstens ein oxidationshemmender Stoff (Antioxidanz) zugesetzt wurde. Ein solchermaßen gefriergetrocknetes Hackfleisch weist darüber hinaus sehr gute geschmackliche Eigenschaften auf. Besondere sensorische Vorteile hinsichtlich Geruch und Geschmack ergeben sich, wenn das Instant-Hackfleischprodukt möglichst gleichmäßig verteilte Anteile von Antioxidantien, insbesondere in Form von pflanzlichen Extrakten enthält.

Für eine besonders gleichmäßige Verteilung von Antioxidantien oder eines Antioxidanz im Hackfleisch ist es günstig, dem Hackfleisch vor dem Gefriertrocknen zusätzlich einen oder mehrere amphiphile oder lipophile Stoffe zuzugeben, so dass gemäß einer vorteilhaften Ausgestaltung des Instant-Hackfleischprodukts dieses auch Anteile derartiger Zusätze enthält. Als "lipophil" wird eine Substanz bezeichnet, die sich gut in Fetten oder Ölen lösen kann. Amphiphile Substanzen sind sowohl in Wasser als auch in lipophilen Stoffen zumindest zum Teil löslich.

Üblicherweise werden Fleischprodukten ein Antioxidanz wie beispielsweise Rosmarinextrakt zugegeben, um Oxidationsvorgänge zu reduzieren. Bei Hackfleisch ist jedoch bedingt durch die große Oberfläche des Produktes und die Feinverteilung des oxidationssensiblen Fleischfetts die Verteilung des Antioxidanz sehr schwierig.

Gelöst wurde dieses Problem durch eine Verdünnung des Antioxidanz bzw. der Antioxidantien in einer in Bezug zu dem bereits vorhandenen Ausgangsfettgehalt des frischen Hackfleischs zusätzlich zugegebenen Fett- oder Ölphase, die stufenweise in das Hackfleisch eingearbeitet wird. Dabei zeigt sich, dass das auf diese Weise fein verteilte Antioxidanz direkt an den Fettpartikeln angelagert oder in diese eingebracht wird und somit an den oxidationsempfindlichsten Stellen des Hackfleisches wirken kann. Bei auf diese Weise produzierten Instant-Hackfleischprodukten ist eine verringerte Oxidationsneigung messbar.

Besonders vorteilhaft ist die Verteilung der Antioxidantien oder des Antioxidanz in einer Fettphase mit einem hohen Anteil an gesättigten Fettsäuren. Dadurch kann eine lange Verfügbarkeit des Antioxidanz im Hackfleisch gewährleistet werden. Es ist auch möglich, amphiphile Stoffe wie Alkohole oder andere Stoffe wie Kombinationen aus Mono-/ Diglyceriden zu verwenden.

Als Antioxidantien können natürliche oder synthetische Stoffe zum Einsatz kommen. Besonders vorteilhaft ist der Einsatz natürlicher Antioxidantien wie Rosmarinextrakt, aplha-Tocopherol und gamma-Tocopherol.

### Vorgaren

Im Folgenden wird das Vorgaren des Fleisch-Rohstoffs beschrieben, was bei mehreren Zutaten in der Verpackung wie gefriergetrocknete Hackfleischformlinge und eine getrocknete Gewürzmischung den Vorteil mit sich bringt, dass dann beide Zutaten die gleiche Zubereitungszeit aufweisen können. Dementsprechend wird die Vorgarzeit des Hackfleischs vorteilhaft so gewählt, dass die noch notwendige Restgarzeit im rehydrierten Zustand der Garungszeit der Zutaten entspricht. Damit wird eine einfache und schnellstmögliche Zubereitungszeit des rehydrierten Hackfleischs möglich.

Das Vorgaren kann gemäß zweier Varianten je nach dem gewünschtem Ergebnis durchgeführt werden.

### Variante 1

Den Anforderungen des Endproduktes entsprechendes Hackfleisch oder charakteristisch zerkleinertes Fleisch wird nach der oben beschriebenen antioxidativen Vorbehandlung in geeignete Därme, Hüllen oder Formen gefüllt und bis zum Erreichen des gewünschten Garungspunkts, beispielsweise wenn die Kerntemperatur des Fleischs eine Temperatur von mehr als 75°C aufweist, in einer Dampfphase, Heißluft, Wasserbad oder anderen geeigneten Medien gekocht, gebrüht, gegart oder gebacken. Wärmeresistenz und Wasserdurchlässigkeit als Eigenschaft der Därme, Hüllen oder Formen wird hier vorausgesetzt.

Kurz nach dem Vorgarungsprozess wird das noch erhitzte Hackfleisch aus den Därmen ausgebracht, um die durch den Garungsvorgang aneinander gelagerten Partikel mit Hilfe eines Kutters oder anderen geeigneten Gerätschaften vor dem Auskühlen wieder zu trennen.

### Variante 2

Alternativ zu Variante 1 wird Fleisch nicht als Hackfleisch, sondern in ganzen Stücken verwendet und bis zum gewünschten Vorgarungspunkt in geeigneten Medien gekocht, gebrüht oder gegart. Nach dem Vorgarungsprozess wird das Fleisch entweder noch erhitzt oder bereits abgekühlt mit Hilfe eines Fleischwolfs, eines Kutters oder anderen geeigneten Gerätschaften auf die gewünschte, charakteristische Größe oder Körnung zu Hackfleisch zerkleinert.

Das Aufbringen oder Einbringen von Antioxidantien (siehe "Oxidationshemmende Vorbehandlung") wird in diesem Fall vor der Garung und/oder nach der Zerkleinerung des Fleisches durchgeführt, um die nach der Zerkleinerung neu gebildeten Oberflächen vor Oxidation zu schützen.

Ein Vorteil der Vorgarung ist die Energieersparnis durch das beim Vorgaren bereits entzogene Wasser. Dieses bereits zeitlich vor der Gefriertrocknung aus dem Hackfleisch oder charakteristisch zerkleinerten Fleisch entfernte Wasser (je nach Verfahren zwischen 15 Gew.-% bis zu 25 Gew.- %) muss somit nicht mehr über die demgegenüber teurere Gefriertrocknung lyophilisiert oder entfernt werden. Hierbei weisen native und nicht vorgegarte Hackfleisch- oder charakteristisch zerkleinerte Fleischmassen einen Wassergehalt von 73 Gew.-%, bis 74 Gew.-%, vorgegarte Hackfleisch- oder charakteristisch zerkleinerte Fleischmassen je nach Vorgarungsverfahren jedoch nur noch zwischen 55 Gew.-% bis 65 Gew.-% an Wassergehalt auf.

Ein weiterer Vorteil der beiden oben beschriebenen Verfahren ist das weitgehende Denaturieren und Verbleiben der fleischeigenen Proteine innerhalb der Fleischmatrix, was sich positiv auf die sensorischen Eigenschaften und die Qualität des Endproduktes auswirkt.

Als weitere Alternative kann Hackfleisch oder charakteristisch zerkleinertes Fleisch beispielsweise durch Schmoren oder Braten auf den gewünschten Garungspunkt vorgegart werden. Eine anschließende Zerkleinerung ist dann nicht mehr notwendig. Beim Braten werden große Mengen fleischeigener Proteine aus der Fleischmatrix freigesetzt, deren Denaturierung nun auch außerhalb der Fleischmatrix stattfindet. Dies führt zu einer Grau-Verfärbung der denaturierten Proteine und somit zur Bildung von Trübstoffen, welche im Endprodukt sichtbar bleiben, wie z.B. in Saucen.

### Bilden von Hackfleischformlingen

Nach der Vorgarung wird das Hackfleisch bevorzugt im noch nicht gefrorenen Zustand zu Hackfleischformlingen geformt.

Dabei soll eine Projektionsfläche des Hackfleischformlings auf einer Horde oder einem Boden der Trockenkammer des Gefriertrockners ein größtes Maß wie einen Durchmesser oder eine Kantenlänge von 2 cm bis 16 cm und in Bezug zur Horde bzw. zum Boden eine größte Höhe von 1 cm bis 4 cm aufweisen.

Bezogen auf die Masse derartiger Hackfleischformlinge weist ein solcher vor dem Gefriertrocknen eine Masse in einem Bereich von 5 g bis 1000 g (Gramm) auf.

Noch bessere Eigenschaften hinsichtlich Trocknungsdurchsatz, Rehydrierungsgeschwindigkeit, Rehydrierungsgrad und Produktqualität ergeben sich, wenn die Projektionsfläche des Hackfleischformlings auf der Horde des Gefriertrockners ein größtes Maß wie einen Durchmesser oder eine Kantenlänge von 3 cm bis 5 cm und in Bezug zur Horde eine größte Höhe von 2 cm bis 4 cm aufweist. Die Masse eines solchen Hackfleischformlings liegt dann in einem Bereich von 20 g bis 100 g (Gramm).

Bezogen auf das Massen-Oberflächenverhältnis eines auf der Horde angeordnete Hackfleischformlings vor dem Gefriertrocknen, d.h. auf das Verhältnis seiner Masse zu seiner Oberfläche ist ein Bereich von 1 kg/m² bis 7 kg/m² günstig.

Danach erfolgt ein schnellst mögliches Abkühlen oder Einfrieren des Hackfleischs oder charakteristisch zerkleinerten Fleisches bzw. der Hackfleischformlinge. Hierbei wird ein Abkühlen auf 0°C bis -1°C angestrebt, ein Verfahrensschritt, welcher im Folgenden näher erläutert wird.

### Gefriertrocknen

Die Gefriertrocknung zeigte sich als besonders schonende Trocknungsart, um den Hackfleischformlingen möglichst rasch Wasser zu entziehen. Die Gefriertrocknung oder Lyophilisation oder Sublimationstrocknung ist die Trocknung von Objekten, welche sich üblicherweise in bereits gefrorenem Zustand befinden. Das heißt, dass das wasserhaltige Hackfleisch tiefgefroren wird und anschließend in die Trockenkammer eines Gefriertrockners kommt. Dort wird es einem Unterdruck von weniger als 6 mbar ausgesetzt. Unter dem Einfluss des Unterdrucks nimmt das gefrorene Wasser während des gesamten Trocknungsvorgangs nicht mehr den flüssigen Aggregatzustand ein, sondern geht direkt von Eis in Dampf über (Sublimation).

Als besonders vorteilhaft hat es sich erwiesen, wenn die bevorzugt vorgegarten Hackfleischformlinge nicht in gefrorenem, sondern im teil- oder nicht gefrorenen Zustand in die Trockenkammer des Gefriertrockners gegeben werden, und durch schnelles Erzeugen eines Vakuums in der Trockenkammer den Hackfleischformlingen so viel Energie und Feuchtigkeit zu entziehen, dass sie während des Trocknungsvorgangs tiefgefroren werden.

Dadurch werden zum einen die Proteine im Hackfleisch geschont und die Wasserbindekapazität des trockenen Produkts bleibt besser erhalten, als wenn eine vorherige Tiefgefrierung stattfindet. Zum andern ist eine kürzere Prozess- oder Verarbeitungszeit möglich, weil die übliche Gefrierphase des frischen Hackfleischs in Gefrierräumen/-truhen entfällt. Die dann kürzere Verarbeitungszeit des Hackfleisches vermindert das Wachstum von Mikroorganismen sowie das Auftreten von Oxidationsvorgängen, die zur Ranzigkeit führen können. Außerdem werden farbliche Veränderungen des Trocknungsguts verringert und die Wasserbindung positiv beeinflusst.

Alternativ können die bevorzugt vorgegarten Hackfleischformlinge auch in durchgefrorenem Zustand in die Trockenkammer des Gefriertrockners eingelegt und dann das Vakuum erzeugt werden.

Einen Vorteil bezüglich der Rehydratisierbarkeit bietet die Trocknung und Lagerung bei Restfeuchte- oder Restwassergehalten unter 5 Gew-%, besser unter 3 Gew-%. Dabei zeigte sich, dass die Wasseraufnahme beim Konstituieren bedingt durch einen höheren osmotischen Zug schneller vonstatten geht.

Es zeigte sich auch, dass sich eine Zugabe von 0,5-1,5% Salz (NaCl) vor dem Gefriertrocknen nicht negativ auf die Trocknungsgeschwindigkeit auswirkt, obwohl sich beim Zusetzen von Salz ein höheres Wasserbindevermögen ergibt.

Vorteilhaft zeigte sich eine Verpackung der gefriergetrockneten Hackfleischformlinge und gegebenenfalls weiterer Zutaten unter Licht- und CO₂-Ausschluss in einer dampf-, sauerstoff- und lichtdichten Verpackung unter Schutzgasatmosphäre. Besonders vorteilhaft erwies sich die Verpackung in einer Atmosphäre aus 70% N₂ und 30% CO₂.

### Rehydrieren

Bei der Rehydrierung von durch das oben beschriebene Verfahren hergestellten und gefriergetrockneten Hackfleischformlingen war die Wasserbindung so hoch, dass 1% bis 3% mehr Wasser gebunden werden konnte als im ursprünglichen frischen Hackfleisch enthalten war. Trotz des größeren Wassergehalts konnten hinsichtlich haptischer und sensorischer Eigenschaften mit frischem Hackfleisch vergleichbare Produkte erhalten werden.

Die gefriergetrockneten Hackfleischformlinge wurden dazu mit der entsprechenden Menge kaltem Wasser übergossen und erhitzt. Nach etwa 2 Minuten Garen bei 80°C bis 95°C waren sie verzehrfertig. In Kombination mit Würzmischungen als Zutat ist die Zubereitung besonders einfach, was den Einsatz in Großküchen erleichtert.

Es hat sich herausgestellt, dass durch die Kombination des Vorgarungsprozesses mit dem Gefriertrocknen von vorgegartem Hackfleisch in den oben beschriebenen charakteristischen Dimensionen eine vorteilhafte Gesamtwirkung erzielt wird, als durch den Vorgarungsprozess die nach dem Rehydrieren noch notwendige Garzeit herabgesetzt und durch die gewählte Dimensionierung der gefriergetrockneten Hackfleischformlinge eine sehr schnelle Rehydrierbarkeit erreicht wird, so dass sich insgesamt eine geringe Gesamtzubereitungszeit des Instant-Hackfleischprodukts ergibt, was insbesondere beim Verbraucher die Akzeptanz eines derartigen Instant-Hackfleischprodukts verbessert.

### Beispiel 1

Zur Herstellung von gefriergetrockneten Hackfleischformlingen wurden die folgenden Zutaten als Ausgangsmaterial verwendet:
- Frisches Hackfleisch vom Schwein, gekühlt, aber nicht durchgefroren, Kategorie S1 1 kg
- Antioxidanzmischung:

| | |
|---|---|
| Pflanzenöl (Sonnenblume) | 9,0 g |
| Rosmarinextrakt (Carnomaxx) | 0,4 g |

Dabei wurde die Anitoxidanzmischung durch ca. 10 Minuten lang bei einer Temperatur von 1°C bis 10°C (Grad Celsius) in 400 g der frischen Hackfleischmenge eingerührt. Anschließend wurde der Rest des Hackfleischs (600 g) mit dem bereits mit der Antioxidanzmischung versehenen Hackfleisch vermischt.

Im nächsten Schritt wurden aus der auf diese Weise erhaltenen Hackfleischmasse Formlinge von ca. 50 g als unregelmäßige Häufchen mit einer größten Kantenlänge von 3 cm bis 5 cm und einer größten Höhe von 2 cm bis 4 cm auf Horden eines Gefriertrockners geformt und verteilt.

Im Rahmen der nachfolgenden Gefriertrocknung wurde der Druck in der Trocknungskammer von Atmosphärendruck innerhalb von weniger als 10 Minuten auf 1 mbar abgesenkt. Die maximale Heizplattentemperatur der Heizplatte im Inneren der Trockenkammer betrug 40°C. Die Trocknungszeit betrug ca. 12-16 Stunden. Nach der Trocknung wurde die Trockenkammer mit Stickstoff belüftet.

Zuletzt wurden die gefriergetrockneten Hackfleischformlinge zusammen mit Gewürzen unter Schutzgasatmosphäre verpackt.

### Beispiel 2

Zur Herstellung von gefriergetrockneten Hackfleischformlingen wurden die folgenden Zutaten als Ausgangsmaterial verwendet:
- Frisches Hackfleisch vom Schwein, Kategorie S1 100 kg
- Antioxidanzmischung:

| | |
|---|---|
| Pflanzenöl (Sonnenblume) | 900 g |
| Rosmarinextrakt (Carnomaxx) | 40 g |

Lösen der Antioxidanzmischung in einer Fettphase unter 10-minütigem Einrühren bei einer Temperatur von 1°C bis 10°C (Grad Celsius). Einarbeiten der Antioxidanzmischung in 4000 g des Hackfleischs, anschließend mit dem Rest des Hackfleischs vermischen.

Danach wurde das mit Antioxidantien versehene Hackfleisch im Kochkutter im Rückwärtsgang bei 90°C für 20 Minuten vorgegart.

Dann wurde das vorgegarte Hackfleisch auf Horden des Gefriertrockners aufgebracht, wobei Formlinge mit einer größten Kantenlänge von 3 cm bis 5 cm und einer größten Höhe von 2 cm bis 4 cm geformt wurden.

Im Rahmen der anschließenden Gefriertrocknung wurde der Druck in der Trockenkammer von Atmosphärendruck innerhalb von weniger als 10 Minuten auf ca. 1 mbar abgesenkt. Die maximale Heizplattentemperatur betrug 80°C, die Trocknungszeit ca. 8-12 Stunden, wobei danach die Trockenkammer des Gefriertrockners mit Stickstoff belüftet wurde.

Schließlich wurden die gefriergetrockneten Hackfleischformlinge zusammen mit Gewürzen unter Schutzgasatmosphäre verpackt.

## Patentansprüche

1. Verfahren zur Herstellung eines Instant-Hackfleischprodukts aus wenigstens einem Hackfleischformling, welcher zum Gefriertrocknen auf einer Horde oder einem Boden einer Trockenkammer eines Gefriertrockners angeordnet wird, wobei eine Projektionsfläche des Hackfleischformlings auf der Horde oder dem Boden des Gefriertrockners ein größtes Maß wie einen Durchmesser oder eine Kantenlänge von 2 cm bis 16 cm und in Bezug zur Horde eine größte Höhe von 1. cm bis 4 cm aufweist, und wobei als Ausgangsmaterial für die Hackfleischformlinge Schweinehackfleisch und/oder Rinderhackfleisch und/oder Geflügelhackfleisch und/oder Fischhackfleisch verwendet wird, **dadurch gekennzeichnet, dass** vor dem Formen des Hackfleischs zu wenigstens einem Hackfleischformling wenigstens ein Antioxidanz in eine separate Fettphase oder amphiphile oder lipophile Phase eingebracht wird, weiche in Bezug zu dem im Hackfleisch bereits vorhandenen Ausgangsfettgehalt eine zusätzliche Fettphase darstellt und welche mit wenigstens einem Teil des Hackfleischs vermischt wird.

2. Verfahren nach Anspruch 1, **dadurch gekennzeichnet, dass** der auf der Horde angeordnete Hackfleischformling vor dem Gefriertrocknen eine Masse in einem Bereich von 5 g bis 1000 g aufweist.

3. Verfahren nach Anspruch 1, **dadurch gekennzeichnet, dass** eine Projektionsfläche des Hackfleischformlings auf der Horde des Gefriertrockners ein größtes Maß wie einen Durchmesser oder eine Kantenlänge von 3 cm bis 5 cm und in Bezug zur Horde eine Höhe von 2 cm bis 4 cm aufweist.

4. Verfahren nach Anspruch 2, **dadurch gekennzeichnet, dass** der auf der Horde angeordnete Hackfleischformling vor dem Gefriertrocknen eine Masse in einem Bereich von 20 g bis 100 g aufweist.

5. Verfahren nach einem der Ansprüche 1 bis 4, **dadurch gekennzeichnet, dass** der auf der Horde angeordnete Hackfleischformling vor dem Gefriertrocknen ein Massen-Oberflächen-Verhältnis in einem Bereich von 1 kg/m² bis 7 kg/m² aufweist.

6. Verfahren nach einem der vorhergehenden Ansprüche, **dadurch gekennzeichnet, dass** die amphiphile oder lipophile Phase aus Öl, Fett, Alkohol und/oder Kombinationen aus Mono-/Diglyceriden besteht.

7. Verfahren nach Anspruch 6, **dadurch gekennzeichnet, dass** die amphiphile oder lipophile Phase wenigstens einen Anteil an gesättigten Fettsäuren aufweist.

8. Verfahren nach einem der vorhergehenden Ansprüche, **dadurch gekennzeichnet, dass** als Antioxidanz ein natürliches oder ein synthetisches Antioxidanz verwendet wird.

9. Verfahren nach Anspruch 8, **dadurch gekennzeichnet, dass** als natürliches Antioxidanz Rosmarinextrakt und/oder alpha-Tocopherol und/oder gamma- Tocopherol und/oder Vitamin C und/oder Karotin verwendet wird.

10. Verfahren nach einem der vorhergehenden Ansprüche, **dadurch gekennzeichnet, dass** das Hackfleisch vor dem Gefriertrocknen im Rahmen eines Vorgarungsprozesses gekocht, gebrüht, gegart oder gebacken wird.

11. Verfahren nach Anspruch 10, **dadurch gekennzeichnet, dass** das Hackfleisch im Rahmen des Vorgarungsprozesses in Därme, Hüllen oder Formen gefüllt und in einer Dampfphase, Heißluft oder Wasserbad gekocht, gebrüht, gegart oder gebacken wird.

12. Verfahren nach Anspruch 10 oder 11, **dadurch gekennzeichnet, dass** der Vorgarungsprozess des Hackfleischs derart durchgeführt wird, dass die Kerntemperatur des Hackfleischs eine Temperatur von mehr als 75°C aufweist.

13. Verfahren nach einem der vorhergehenden Ansprüche, **dadurch gekennzeichnet, dass** dem Hackfleisch vor dem Formen zu wenigstens einem Hackfleischformling und vor dem Gefriertrocknen 0,5 bis 1,5% Salz zugesetzt werden.

14. Verfahren nach einem der vorhergehenden Ansprüche, **dadurch gekennzeichnet, dass** dem Hackfleisch vor dem Formen zu wenigstens einem Hackfleischformling und vor dem Gefriertrocknen Gewürze, Gemüse oder Einlagen zugesetzt werden.

15. Verfahren nach einem der vorhergehenden Ansprüche, **dadurch gekennzeichnet, dass** der wenigstens eine Hackfleischformling vor dem Gefriertrocknen einen Wassergehalt von 68% bis 70% aufweist.

16. Verfahren nach einem der vorhergehenden Ansprüche, **dadurch gekennzeichnet, dass** der wenigstens eine Hackfleischformling in nicht gefrorenem oder in gefrorenem Zustand auf der Horde des Gefriertrockners angeordnet wird.

17. Verfahren nach einem der vorhergehenden Ansprüche, **dadurch gekennzeichnet, dass** die Gefriertrocknung des wenigstens einen Hackfleischformlings derart durchgeführt wird, dass er nach dem Gefriertrocknen einen Feuchtigkeitsgehalt oder Wassergehalt von weniger als 5 Gew-%, insbesondere von weniger als 3 Gew-% aufweist.

18. Verfahren nach einem der vorhergehenden Ansprüche, **dadurch gekennzeichnet, dass** das der gefriergetrocknete Hackfleischformling unter Licht- und Sauerstoffausschluss und Schutzgasatmosphäre in eine dampf-, sauerstoff- und lichtdichte Verpackung verpackt wird.

## Claims

1. A method for producing an instant ground meat product including at least one ground meat molded blank which is arranged on a rack or on a tray of a drying chamber of a freeze dryer for freeze drying, wherein a projection surface of the ground meat molded blank on the rack or on the tray of the freeze dryer has a maximum dimension like a diameter or an edge length of 2 cm to 16 cm and a greatest height of 1 cm to 4 cm with reference to the rack, and wherein ground pork and/or ground beef and/or ground poultry and/or ground fish meat are used as a base material for the ground meat molded blanks, **characterized in that** before forming the ground meat into at least one ground meat molded blank at least one antioxidant is introduced into a separate fat phase or amphiphile or lipophile phase which is an additional fat phase with reference to the intrinsic fat content already included in the ground meat and which is mixed with at least a portion of the ground meat.

2. The method according to claim 1, **characterized in that** the ground meat molded blank arranged on the rack has a mass in a range of 5 g to 1000 g before freeze drying.

3. The method according to claim 1, **characterized in that** a projection surface of the ground meat molded blank on the rack of the freeze dryer has a largest dimension like a diameter or an edge length of 3 cm to 5 cm and a height of 2 cm to 4 cm with respect to the rack.

4. The method according to claim 2, **characterized in that** the ground meat molded blank arranged on the rack has a mass in a range of 20 g to 100 g before freeze drying.

5. The method according to one of the claims 1 - 4, **characterized in that** ground meat molded blanks arranged on the rack have a mass/surface ratio in a range 1 kg /m² to 7 kg/m² before freeze drying.

6. The method according to one of the preceding claims, **characterized in that** the amphiphile or lipophile phase includes oil, fat, alcohol and /or combinations of mono- / diglycerides.

7. The method according to claim 6, **characterized in that** the amphiphile or lipophile phase includes at least a portion of saturated fatty acids.

8. The method according to one of the preceding claims, **characterized in that** a natural or synthetic antioxidant is used as an antioxidant.

9. The method according to claim 8, **characterized in that** rosemary extract and/or alpha tocopherol and/or gamma tocopherol and/or vitamin C and/or carotene is used as a natural antioxidant.

10. The method according to one of the preceding claims, **characterized in that** the ground meat is cooked, broiled, simmered or roasted in a pre cooking process before freeze drying.

11. The method according to claim 10, **characterized in that** the ground meat is filled into guts, shells or molds in the precooking process and cooked, broiled, simmered or baked in a vapor phase, hot air or in a water bath.

12. The method according to claim 10 or 11, **characterized in that** the pre cooking process of the ground meat is performed so that the core temperature of the ground meat is 75° C or more.

13. The method according to one of the preceding claims, **characterized in that** 0.5% - 1.5% by weight salt is added to the ground meat before forming into the at least one ground meat molded blank and before freeze drying.

14. The method according to one of the preceding claims, **characterized in that** spices, vegetables or ingredients are added to the ground meat before forming into the at least one ground meat molded blank and before freeze drying.

15. The method according to one of the preceding claims, **characterized in that** the at least one ground meat molded blank has a water content of 68% to 78% before freeze drying.

16. The method according to one of the preceding claims, **characterized in that** the at least one ground meat molded blank is arranged on the rack of the freeze drier in non frozen or in frozen condition.

17. The method according to one of the preceding claims, **characterized in that** the freeze drying of the at least one ground meat molded blank is performed so that it has a moisture content or a water content of less than 5% by weight, in particular less than 3% by weight.

18. The method according to one of the preceding claims, **characterized in that** the freeze- dried ground meat molded blank is packaged under exclusion of light and oxygen in a protective gas atmosphere into a vapor-, oxygen- and light proof packaging.

## Revendications

1. Procédé pour fabriquer un produit instantané à base de viande hachée constitué par au moins un ensemble de viande hachée agglomérée qui, pour être lyophilisé, est placé sur une claie ou un fond d'une chambre de séchage d'un lyophilisateur, une surface de projection de l'ensemble de viande agglomérée sur la claie ou sur le fond du lyophilisateur présentant une plus grande dimension comme un diamètre ou une longueur d'arête de 2 cm à 16 cm et une plus grande hauteur de 1 cm à 4 cm par rapport à la claie et de la viande hachée de porc et/ou de la viande hachée de boeuf et/ou de la viande hachée de volaille et/ou de la chair hachée de poisson étant utilisée comme matière de départ pour les ensembles de viande hachée agglomérée, **caractérisé en ce qu'**avant le façonnage de la viande hachée en au moins un ensemble de viande hachée au moins un antioxydant est introduit dans une phase grasse séparée ou dans une phase amphiphile ou lipophile qui constitue une phase grasse supplémentaire par rapport à la teneur en matières grasses de départ qui existe dans la viande hachée et qui est mélangée à au moins une partie de la viande hachée.

2. Procédé selon la revendication 1, **caractérisé en ce que** l'ensemble de viande hachée agglomérée placé sur la claie présente, avant la lyophilisation, une masse dans une plage de 5 g à 1000 g.

3. Procédé selon la revendication 1, **caractérisé en ce qu'**une surface de projection de l'ensemble de viande agglomérée sur la claie du lyophilisateur présente une plus grande dimension comme un diamètre ou une longueur d'arête de 3 cm à 5 cm et une hauteur de 3 cm à 4 cm par rapport à la claie.

4. Procédé selon la revendication 2, **caractérisé en ce que** l'ensemble de viande hachée agglomérée placé sur la claie présente, avant la lyophilisation, une masse dans une plage de 20 g à 100 g.

5. Procédé selon la revendication 2, **caractérisé en ce que** l'ensemble de viande hachée agglomérée placé sur la claie présente, avant la lyophilisation, un rapport masse/surface dans une plage de 1 kg/m² à 7 kg/m².

6. Procédé selon l'une des revendications précédentes, **caractérisé en ce que** la phase amphiphile ou lipophile est constituée par de l'huile, de la graisse, de l'alcool et/ou des combinaisons de mono-diglycérides.

7. Procédé selon la revendication 6, **caractérisé en ce que** la phase amphiphile ou lipophile présente au moins une proportion d'acides gras saturés.

8. Procédé selon l'une des revendications précédentes, **caractérisé en ce qu'**un antioxydant naturel ou synthétique est utilisé comme antioxydant.

9. Procédé selon la revendication 8, **caractérisé en ce que** de l'extrait de romarin et/ou de l'alpha-tocophérol et/ou du gamma-tocophérol et/ou de la vitamine C et/ou de la carotène est utilisée comme antioxydant naturel.

10. Procédé selon l'une des revendications précédentes, **caractérisé en ce que** la viande hachée est cuite, bouillie, cuite à l'étouffée ou cuite au four avant la lyophilisation dans le cadre d'un processus de précuisson.

11. Procédé selon la revendication 10, **caractérisé en ce que**, dans le cadre du processus de précuisson, la viande hachée est farcie dans des boyaux, des enveloppes ou des moules et qu'elle est cuite, bouillie cuite à l'étouffée ou cuite au four dans une phase vapeur, à la chaleur tournante ou au bain-marie.

12. Procédé selon la revendication 10 ou 11, **caractérisé en ce que** le processus de précuisson de la viande hachée est exécuté de telle manière que la température à coeur de la viande hachée est une température de plus de 75°C.

13. Procédé selon l'une des revendications précédentes, **caractérisé en ce que** 0,5 à 1,5% de sel est ajouté à la viande hachée avant le façonnage en au moins un ensemble de viande hachée agglomérée et avant la lyophilisation.

14. Procédé selon l'une des revendications précédentes, **caractérisé en ce que** des épices, des légumes ou des ingrédients solides sont ajoutés à la viande hachée avant le façonnage en au moins un ensemble de viande hachée agglomérée et avant la lyophilisation.

15. Procédé selon l'une des revendications précédentes, **caractérisé en ce que** l'ensemble de viande hachée agglomérée qui existe au moins présente, avant la lyophilisation, une teneur en eau de 68% à 70%.

16. Procédé selon l'une des revendications précédentes, **caractérisé en ce que** l'ensemble de viande hachée agglomérée qui existe au moins est placé sur la claie du lyophilisateur à l'état non congelé ou à l'état congelé.

17. Procédé selon l'une des revendications précédentes, **caractérisé en ce que** la lyophilisation de l'ensemble de viande hachée agglomérée qui existe au moins est exécutée de telle manière qu'il présente, après la lyophilisation, une teneur en humidité ou une teneur en eau de moins de 5 % en poids, en particulier de moins de 3 % en poids.

18. Procédé selon l'une des revendications précédentes, **caractérisé en ce que** l'ensemble de viande hachée agglomérée lyophilisée est emballé dans un emballage étanche à la vapeur, à l'oxygène et à la lumière à l'abri de la lumière, en l'absence d'oxygène et dans une atmosphère inerte.
